# EUROPEAN PATENT APPLICATION

(11) **EP 4 622 166 A1**
(43) Date of publication of application: **24.09.2025**
(21) Application number: 25163438.2
(22) Date of filing: 13.03.2025
(51) Int. Cl.: H04L 9/08, H04L 9/32, H04L 9/40

(54) **QUANTUM KEY DISTRIBUTION SYSTEM, QUANTUM KEY DISTRIBUTION DEVICE, AND QUANTUM KEY DISTRIBUTION METHOD**

(30) Priority: 18.03.2024 JP 2024042269
(71) Applicant: Kabushiki Kaisha Toshiba, Tokyo 105-0023 (JP); Toshiba Digital Solutions Corporation, Kawasaki-shi, Kanagawa 212-0013 (JP)
(72) Inventor: SHIMADA, Eiji, Kawasaki-shi (JP)
(74) Representative: Marks & Clerk LLP

(57) **Abstract**

A quantum key distribution system according to an arrangement includes a transmission device configured to transmit a photon to be used for generating an encryption key in quantum key distribution; and a reception device configured to receive the photon. The transmission device includes a quantum signal transmission unit configured to transmit the photon as a quantum signal. The reception device includes a quantum signal reception unit configured to receive the quantum signal. The quantum key distribution system further includes a first switch unit configured to select a transmission line for transmitting the quantum signal from a plurality of transmission lines; and a second switch unit configured to select the transmission line for receiving the quantum signal from the plurality of transmission lines.

## Description

### FIELD

Arrangements of the present disclosure relate to a quantum key distribution system, a quantum key distribution device, and a quantum key distribution method.

### BACKGROUND

There has been known a quantum key distribution (QKD) system capable of sharing an encryption key between two separately-located sites without leaking information to a third party (eavesdropper) having any theoretical calculation capability by using quantum-mechanical properties of light. A QKD device, on a transmission side, which outputs an encryption key on a photon is paired with a QKD device, on a reception side, which detects the photon. The QKD device on the transmission side and the QKD device on the reception side are connected by, for example, two optical transmission lines. Specifically, one optical fiber is allocated to a quantum signal channel for transmitting an encryption key on a photon, and another optical fiber is allocated to a classical signal channel mainly used for exchanging control information.

In the conventional technology, however, a transmission line having a higher encryption key generation speed is not easily selectable.

### BRIEF DESCRIPTION OF THE DRAWINGS

Fig. 1 illustrates a configuration example of a quantum key distribution system of a first arrangement;
Fig. 2 illustrates an example of default transmission lines of a first arrangement;
Fig. 3 illustrates an example of cross transmission lines of the first arrangement;
Fig. 4 is a flowchart illustrating an example of a quantum key distribution method of the first arrangement;
Fig. 5 illustrates a configuration example of a quantum key distribution system of a second arrangement;
Fig. 6 illustrates a configuration example of a quantum key distribution system of a third arrangement;
Fig. 7 illustrates a configuration example of a quantum key distribution system of a fourth arrangement;
Fig. 8 illustrates a configuration example of a quantum key distribution system of a fifth arrangement;
Fig. 9 illustrates a configuration example of a quantum key distribution system of a sixth arrangement;
Fig. 10 illustrates a configuration example of a quantum key distribution system of a seventh arrangement; and
Fig. 11 illustrates hardware configuration examples of QKD devices of the first to seventh arrangements.

### DETAILED DESCRIPTION

A quantum key distribution system according to an arrangement includes a transmission device, a reception device, a first switch unit, and a second switch unit. The transmission device is configured to transmit a photon to be used for generating an encryption key in quantum key distribution. The reception device is configured to receive the photon. The transmission device includes a quantum signal transmission unit configured to transmit the photon as a quantum signal, and the reception device includes a quantum signal reception unit configured to receive the quantum signal. The first switch unit is configured to select a transmission line for transmitting the quantum signal from a plurality of transmission lines. The second switch unit is configured to select the transmission line for receiving the quantum signal from the plurality of transmission lines.

Arrangements of a quantum key distribution system, a quantum key distribution device, and a quantum key distribution method will be described in detail below with reference to the accompanying drawings.

The encryption key generation speed of a quantum key distribution system is affected by an optical transmission line between a QKD device on a transmission side and a QKD device on a reception side. The encryption key generation speed is indicated by an increase amount per unit time of an encryption key shared by the QKD device on the transmission side and the QKD device on the reception side. Typical examples of the optical transmission line include an optical fiber. Light passing through an optical fiber is affected by crosstalk between optical fibers, fiber bending, fiber vibration, optical loss on a fiber connection surface, intrusion of light from the outside, temperature, humidity, stress, and the like.

Since a quantum signal channel transmits an encryption key on a photon, the optical power of the quantum signal channel is extremely low compared to that of a classical signal channel. As such, the quantum signal channel is more easily affected by intrusion of external light to an optical transmission line than the classical signal channel. Even for the faint external light, because the inherent optical power is low, and the transmitted photons are buried in the external light. This makes it difficult for the QKD device on the reception side to correctly detect the photons.

Furthermore, when the optical loss of the optical transmission line increases for some reason, the optical power of the quantum signal channel reaching the QKD device on the reception side further decreases. This makes it difficult for the QKD device on the reception side to correctly detect signals. For these reasons, the quantum signal channel is more easily affected by the optical transmission line between the QKD device on the transmission side and the QKD device on the reception side than the classical signal channel.

It is assumed that one of two optical fibers is allocated to the quantum signal channel and the other is allocated to the classical signal channel. Furthermore, it is assumed that the two optical fibers have the same specifications, characteristics, and external environments. It is assumed that the state of the two optical fibers changes to a state in which external light enters only the optical fiber allocated to the quantum signal channel. In this case, when the optical fiber which the external light enters is used for the transmission of the classical signal channel and the optical fiber which the external light does not enter is used for the transmission of the quantum signal channel, the detection accuracy of the quantum signal channel in the QKD device on the reception side is improved, and therefore, the encryption key generation speed is increased.

Furthermore, for example, it is assumed that the optical fiber allocated to the quantum signal channel has the same other characteristics as, but has a larger optical loss than the optical fiber allocated to the classical signal channel. In this case also, when the optical fiber having the larger optical loss is used for the transmission of the classical signal channel and the optical fiber having the less optical loss is used for the transmission of the quantum signal channel, the detection accuracy of the quantum signal channel in the QKD device on the reception side is improved, and therefore, the encryption key generation speed is increased.

Conventionally, in order to replace the optical transmission lines, an operator has been required to replace the optical fibers on both sides of the QKD device on the transmission side and the QKD device on the reception side and check whether the encryption key generation speed actually increases. Furthermore, when the encryption key generation speed is not increased as compared to the pre-replaced speed, a work of returning the optical fiber connection to the original optical fiber connection has been required.

### First Arrangement

In a first arrangement, a quantum key distribution system having a function of selecting an optical transmission line will be described.

### Configuration Example

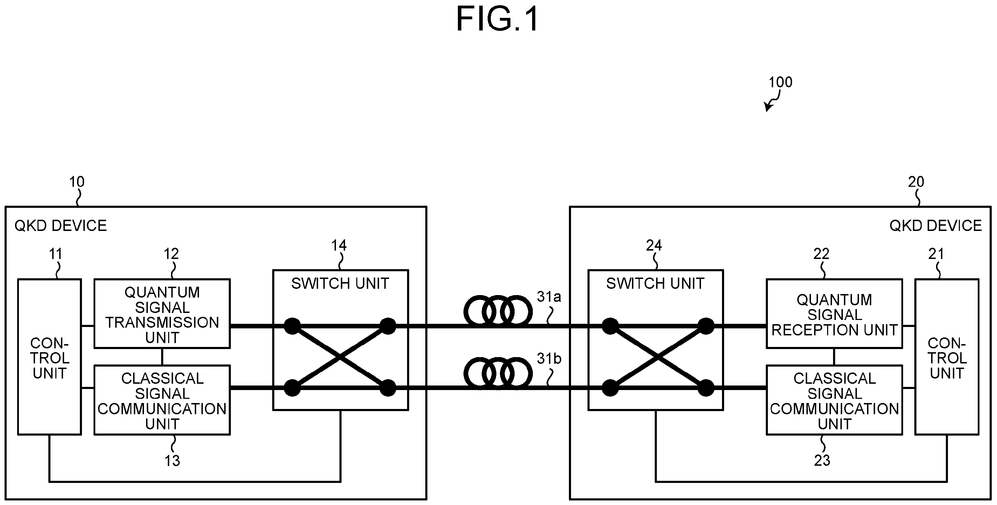

Fig. 1 illustrates a configuration example of a quantum key distribution system 100 of a first arrangement. The quantum key distribution system 100 of the first arrangement includes a QKD device 10 and a QKD device 20, and optical transmission lines 31a and 31b.

The QKD device 10 on the transmission side includes a control unit 11, a quantum signal transmission unit 12, a classical signal communication unit 13, and a switch unit 14. The QKD device 20 on the reception side includes a control unit 21, a quantum signal reception unit 22, a classical signal communication unit 23, and a switch unit 24.

The QKD device 10 on the transmission side transmits an encryption key on a photon to the QKD device 20 on the reception side.

The control unit 11 controls the quantum signal transmission unit 12, the classical signal communication unit 13, and the switch unit 14. The control unit 11 is implemented by at least one control device. The control device may be, for example, a central processing unit (CPU), a microprocessor, an application specific integrated circuit (ASIC), a field-programmable gate array (FPGA), or a combination thereof.

The quantum signal transmission unit 12 transmits an encryption key on a photon. The classical signal communication unit 13 transmits and receives a signal of a classical signal channel to and from the classical signal communication unit 23. In the classical signal channel, a control signal in quantum key distribution is transmitted and received as a classical signal.

The switch unit 14 is a 2 x 2 optical switch that switches between the roles of the optical transmission lines 31a and 31b in response to a command from the control unit 11.

The QKD device 20 on the reception side receives the encryption key transmitted on a photon by the QKD device 10 on the transmission side. The control unit 21 controls the quantum signal reception unit 22, the classical signal communication unit 23, and the switch unit 24. Similarly to the above-described control unit 11, the control unit 21 is implemented by at least one control device. The quantum signal reception unit 22 receives the quantum key transmitted on a photon by the quantum signal transmission unit 12. The classical signal communication unit 23 transmits and receives a signal of a classical signal channel to and from the classical signal communication unit 13. The switch unit 24 is a 2 x 2 optical switch that switches between the roles of the optical transmission lines 31a and 31b in response to a command from the control unit 21.

The optical transmission line 31a is used as a transmission line for a quantum signal channel or the classical signal channel. The optical transmission line 31b is used as a transmission line for the quantum signal channel or the classical signal channel.

When not being distinguished, the optical transmission lines 31a and 31b are hereinafter simply referred to as optical transmission lines 31.

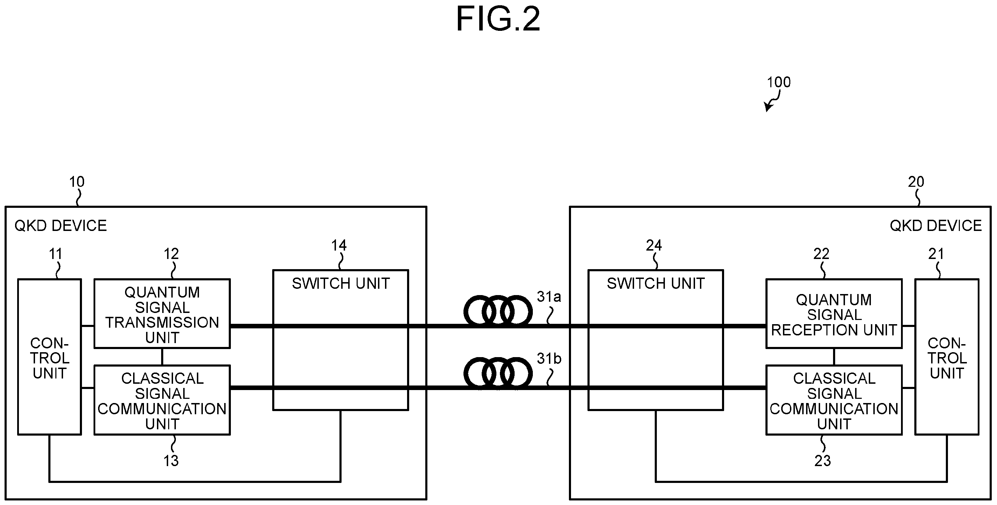

Fig. 2 illustrates an example of default transmission lines of the first arrangement. Fig. 2 illustrates an example of a case where both the switch units 14 and 24 select the default transmission lines. The quantum signal reception unit 22 receives the encryption key transmitted on a photon from the quantum signal transmission unit 12 via the optical transmission line 31a. The classical signal communication unit 13 and the classical signal communication unit 23 transmit and receive a signal of a classical signal channel to and from each other via the optical transmission line 31b.

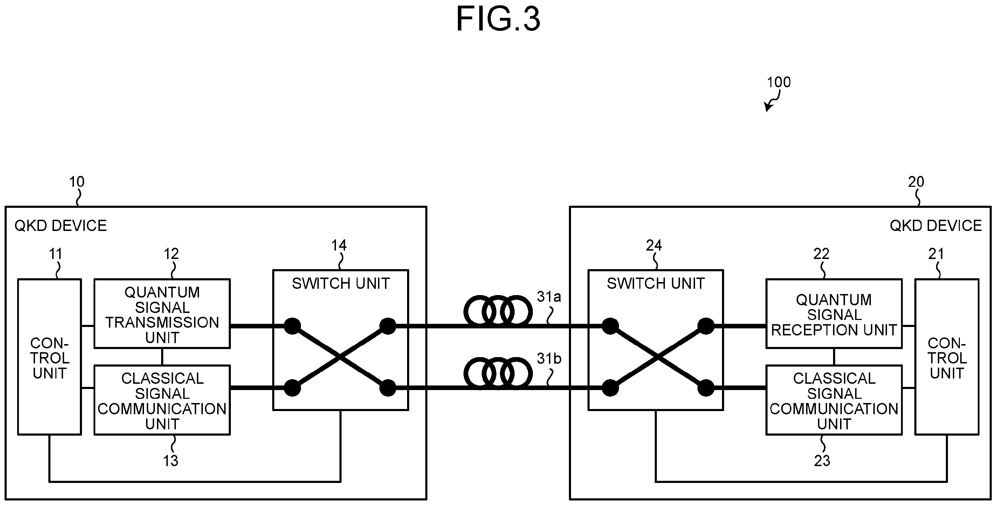

Fig. 3 illustrates an example of cross transmission lines of the first arrangement. Fig. 3 illustrates an example of a case where both the switch units 14 and 24 select the cross transmission lines. The quantum signal reception unit 22 receives the encryption key transmitted on a photon from the quantum signal transmission unit 12 via the optical transmission line 31b. The classical signal communication unit 13 and the classical signal communication unit 23 transmit and receive a signal of a classical signal channel to and from each other via the optical transmission line 31a.

### Example of Quantum Key Distribution Method

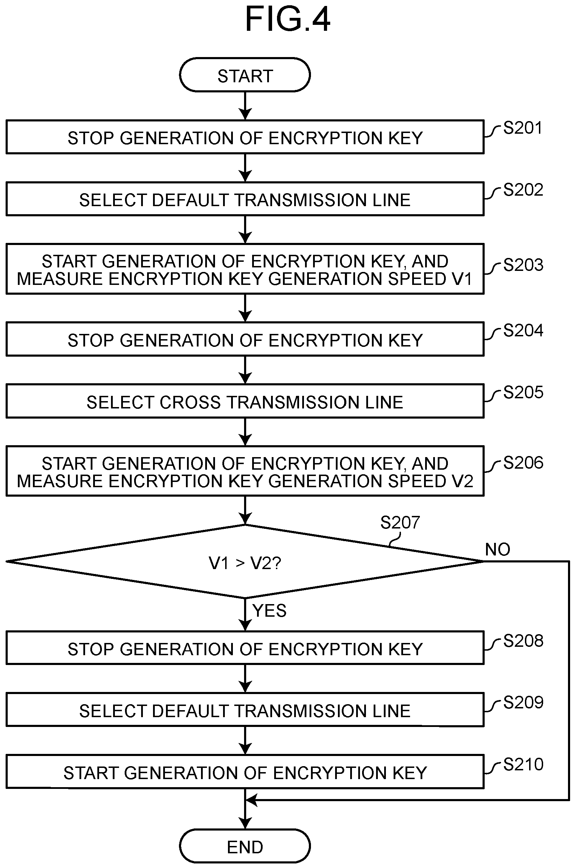

Fig. 4 is a flowchart illustrating an example of a quantum key distribution method of the first arrangement. Fig. 4 is a flowchart illustrating an example in which an optical transmission line having a further increased encryption key generation speed is selected in the quantum key distribution system 100 having a function of selecting the optical transmission line 31a or 31b.

First, the control unit 11 and the control unit 21 cooperate to stop the generation of an encryption key, and stop the transmission of a quantum signal (Step S201).

Next, the switch unit 14 selects the default transmission line in accordance with a command from the control unit 11. The switch unit 24 selects the default transmission line in accordance with a command from the control unit 21 (Step S202).

Next, the control unit 11 and the control unit 21 cooperate to start the generation of an encryption key, and measure an encryption key generation speed V1 (Step S203).

Next, the control unit 11 and the control unit 21 cooperate to stop the generation of an encryption key, and stop the transmission of a quantum signal (Step S204).

Next, the switch unit 14 selects a cross transmission line in accordance with a command from the control unit 11. The switch unit 24 selects the cross transmission line in accordance with a command from the control unit 21 (Step S205).

Next, the control unit 11 and the control unit 21 cooperate to start the generation of an encryption key, and measure an encryption key generation speed V2 (Step S206).

Next, the control unit 11 or the control unit 21 determines whether or not the encryption key generation speed V1 is higher than the encryption key generation speed V2 (Step S207). When the encryption key generation speed V1 is not higher than the encryption key generation speed V2 (Step S207, No), the flow ends.

When the encryption key generation speed V1 is higher than the encryption key generation speed V2 (Step S207, Yes), the control unit 11 and the control unit 21 cooperate to stop the generation of an encryption key, and stop the transmission of a quantum signal (Step S208).

Next, the switch unit 14 selects the default transmission line in accordance with a command from the control unit 11. The switch unit 24 selects the default transmission line in accordance with a command from the control unit 21 (Step S209).

Next, the control unit 11 and the control unit 21 cooperate to start the generation of an encryption key (Step S210).

Note that the control unit 11 may measure the encryption key generation speeds V1 and V2, the control unit 21 may measure the encryption key generation speeds V1 and V2, and the control unit 11 and the control unit 21 may measure the encryption key generation speeds V1 and V2 in cooperation.

As described above, in the quantum key distribution system 100 of the first arrangement, the QKD device 10 (example of transmission device) transmits a photon to be used for generating an encryption key in quantum key distribution. The QKD device 20 (example of reception device) receives a photon. The quantum signal transmission unit 12 transmits the photon as a quantum signal. The quantum signal reception unit 22 receives the quantum signal. The switch unit 14 on the transmission side selects a transmission line for transmitting a quantum signal from the two optical transmission lines 31a and 31b. Furthermore, the switch unit 24 on the reception side selects a transmission line for receiving a quantum signal from the two optical transmission lines 31a and 31b.

As a result, according to the quantum key distribution system 100 of the first arrangement, an optical transmission line 31 having a higher encryption key generation speed can be easily selected. For example, an optical transmission line 31 having a higher encryption key generation speed can be more easily reselected periodically or at an appropriate time (e.g., time when the generation of encryption key is started and time when encryption key generation speed decreases).

As a result, the quantum key distribution system 100 of the first arrangement can keep the encryption key generation speed higher than before.

### Second Arrangement

Next, a second arrangement will be described. In the description of the second arrangement, description similar to that of the first arrangement will be omitted, and portions different from those of the first arrangement will be described.

### Configuration Example

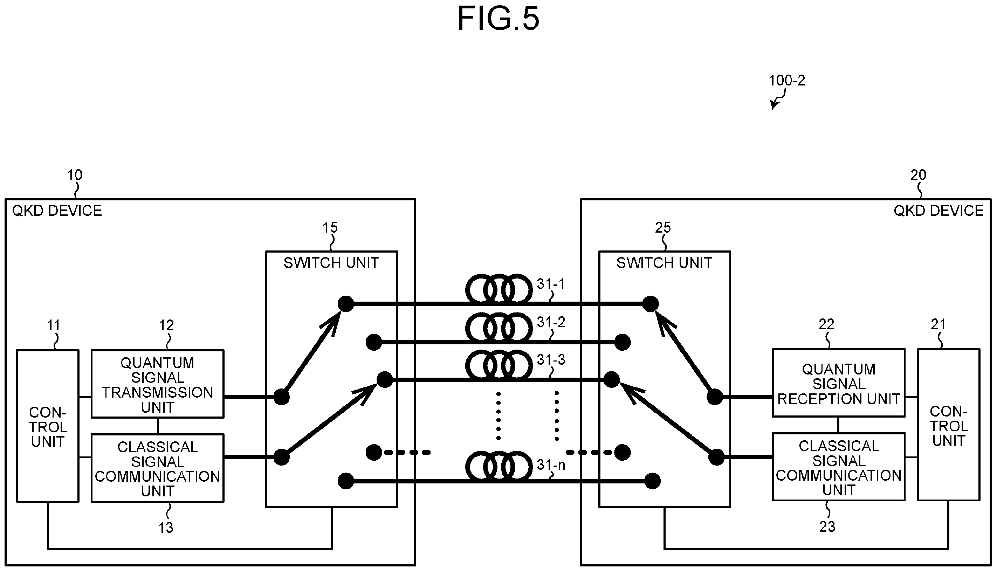

Fig. 5 illustrates a configuration example of a quantum key distribution system 100-2 of the second arrangement. The quantum key distribution system 100-2 of the second arrangement includes the QKD devices 10 and 20 and n optical transmission lines 31-1 to 31-n.

The QKD device 10 on the transmission side includes the control unit 11, the quantum signal transmission unit 12, the classical signal communication unit 13, and a switch unit 15. The QKD device 20 on the reception side includes the control unit 21, the quantum signal reception unit 22, the classical signal communication unit 23, and a switch unit 25.

The QKD device 10 on the transmission side transmits an encryption key on a photon to the QKD device 20 on the reception side. Operations of the control unit 11, the quantum signal transmission unit 12, and the classical signal communication unit 13 are similar to that of the first arrangement, so that the description thereof will be omitted.

The switch unit 15 is a 2xN optical switch that selects a transmission line to be used for a quantum signal channel and a transmission line to be used for a classical signal channel from the optical transmission lines 31-1 to 31-n in accordance with a command from the control unit 11.

The QKD device 20 on the reception side receives the encryption key transmitted on a photon by the QKD device 10 on the transmission side. Operations of the control unit 21, the quantum signal reception unit 22, and the classical signal communication unit 23 are similar to that of the first arrangement, so that the description thereof will be omitted.

The switch unit 25 is a 2xN optical switch that selects a transmission line to be used for a quantum signal channel and a transmission line to be used for a classical signal channel from the optical transmission lines 31-1 to 31-n in accordance with a command from the control unit 21.

Disturbances to the optical transmission lines 31-1 to 31-n and the characteristics of the optical transmission lines 31-1 to 31-n change with time. In the second arrangement, for example, the control units 11 and 21 test the series of optical transmission lines 31-1 to 31-n, and measure an encryption key generation speed in each case. Then, the control units 11 and 21 select an optical transmission line 31 having the highest encryption key generation speed based on the measurement result, so that the encryption key generation speed can be kept higher than before.

Specifically, for example, the control units 11 and 21 periodically measure an encryption key generation speed for each of the plurality of optical transmission lines 31-1 to 31-n, and determine a transmission line for transmitting a quantum signal based on the encryption key generation speed.

Furthermore, for example, the control units 11 and 21 measure an encryption key generation speed for each of the plurality of optical transmission lines 31-1 to 31-n at the time when the generation of an encryption key is started, and determine a transmission line for transmitting a quantum signal based on the encryption key generation speed.

Furthermore, for example, the control units 11 and 21 measure an encryption key generation speed for each of the plurality of optical transmission lines 31-1 to 31-n at the time when the encryption key generation speed becomes smaller than a threshold, and determine a transmission line for transmitting a quantum signal based on the encryption key generation speed.

As described above, the control unit 11 controls the switch unit 15, and the control unit 21 controls the switch unit 25. A transmission line for the quantum signal channel having a higher encryption key generation speed is thereby determined from the n optical transmission lines 31-1 to 31-n. Then, the control unit 11 controls the switch unit 15, and the control unit 21 controls the switch unit 25. A transmission line for transmitting and receiving a classical signal of the classical signal channel is thereby determined from n-1 transmission lines excluding the transmission line to be used for the quantum signal channel.

As a result, according to the quantum key distribution system 100-2 of the second arrangement, effects similar to those of the first arrangement can be obtained. As compared to the first arrangement, two options of the optical transmission lines 31 increase to n options, so that the encryption key generation speed of a transmission line for the quantum signal channel can be further increased.

### Third Arrangement

Next, a third arrangement will be described. In the description of the third arrangement, description similar to that of the second arrangement will be omitted, and portions different from those of the second arrangement will be described.

### Configuration Example

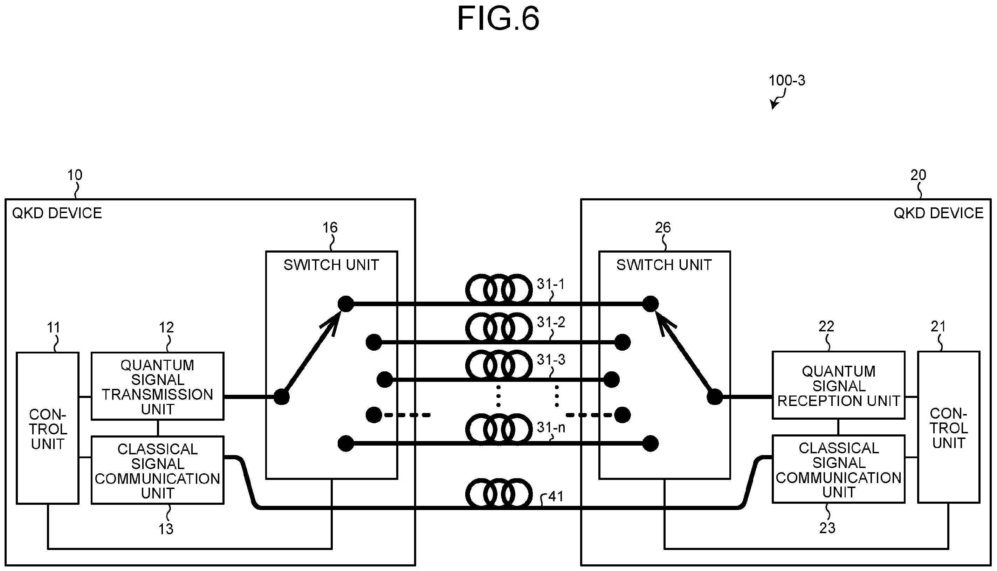

Fig. 6 illustrates a configuration example of a quantum key distribution system 100-3 of the third arrangement. The quantum key distribution system 100-3 of the third arrangement includes the QKD devices 10 and 20, the n optical transmission lines 31-1 to 31-n, and an optical transmission line 41.

The QKD device 10 on the transmission side includes the control unit 11, the quantum signal transmission unit 12, the classical signal communication unit 13, and a switch unit 16. The QKD device 20 on the reception side includes the control unit 21, the quantum signal reception unit 22, the classical signal communication unit 23, and a switch unit 26.

The QKD device 10 on the transmission side transmits an encryption key on a photon to the QKD device 20 on the reception side. Operations of the control unit 11, the quantum signal transmission unit 12, and the classical signal communication unit 13 are similar to that of the second arrangement, so that the description thereof will be omitted.

The switch unit 16 is a 2xN optical switch that selects a transmission line to be used for a quantum signal channel from the optical transmission lines 31-1 to 31-n in accordance with a command from the control unit 11.

The optical transmission line 41 is used as a transmission line for a classical signal channel.

The QKD device 20 on the reception side receives the encryption key transmitted on a photon by the QKD device 10 on the transmission side. Operations of the control unit 21, the quantum signal reception unit 22, and the classical signal communication unit 23 are similar to that of the second arrangement, so that the description thereof will be omitted.

The switch unit 26 is a 2xN optical switch that selects a transmission line to be used for a quantum signal channel from the optical transmission lines 31-1 to 31-n in accordance with a command from the control unit 21.

In the third arrangement, the control unit 11 controls the switch unit 16, and the control unit 21 controls the switch unit 26. A transmission line for the quantum signal channel having a higher encryption key generation speed can be thereby selected from the n optical transmission lines 31-1 to 31-n.

As a result, according to the quantum key distribution system 100-3 of the third arrangement, effects similar to those of the second arrangement can be obtained. As compared to the second arrangement, the optical transmission line 41 for the classical communication channel is not switched, so that, advantageously, exchange of control information between the QKD device 10 on the transmission side and the QKD device 20 on the reception side is not interrupted.

### Fourth Arrangement

Next, a fourth arrangement will be described. In the description of the fourth arrangement, description similar to that of the first arrangement will be omitted, and portions different from those of the first arrangement will be described.

### Configuration Example

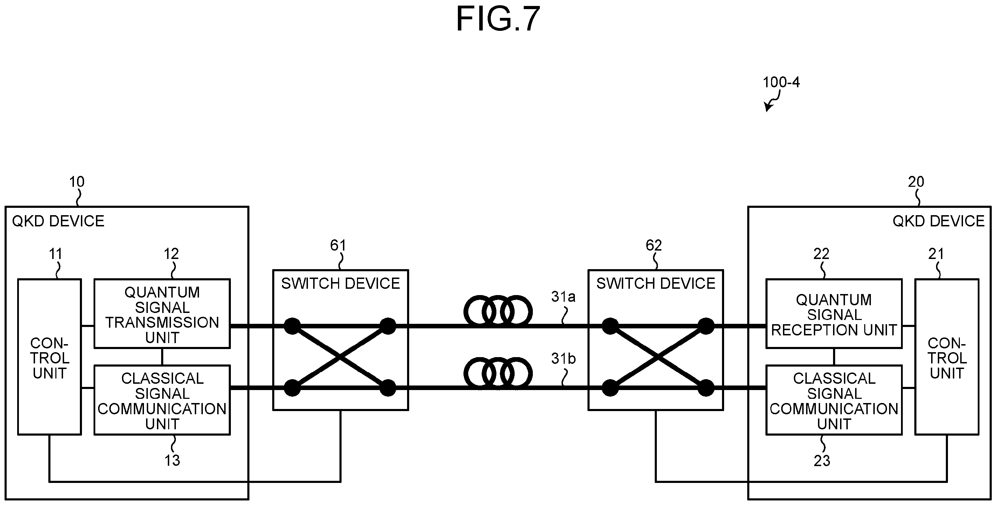

Fig. 7 illustrates a configuration example of a quantum key distribution system 100-4 of the fourth arrangement. The quantum key distribution system 100-4 of the fourth arrangement includes the QKD devices 10 and 20, the optical transmission lines 31a and 31b, and switch devices 61 and 62.

The QKD device 10 on the transmission side includes the control unit 11, the quantum signal transmission unit 12, and the classical signal communication unit 13. The QKD device 20 on the reception side includes the control unit 21, the quantum signal reception unit 22, and the classical signal communication unit 23.

The QKD device 10 on the transmission side transmits an encryption key on a photon to the QKD device 20 on the reception side. Operations of the control unit 11, the quantum signal transmission unit 12, and the classical signal communication unit 13 are similar to that of the first arrangement, so that the description thereof will be omitted.

In the fourth arrangement, the switch unit 14 of the first arrangement is implemented as the switch device 61 outside the QKD device 10.

The QKD device 20 on the reception side receives the encryption key transmitted on a photon by the QKD device 10 on the transmission side. Operations of the control unit 21, the quantum signal reception unit 22, and the classical signal communication unit 23 are similar to that of the first arrangement, so that the description thereof will be omitted.

In the fourth arrangement, the switch unit 24 of the first arrangement is implemented as the switch device 62 outside the QKD device 10.

According to the quantum key distribution system 100-4 of the fourth arrangement, effects similar to those of the first arrangement can be obtained. As compared to the first arrangement, the switch devices 61 and 62 are provided outside the QKD devices 10 and 20, so that the quantum key distribution system 100-4 that enables more inexpensive selection of an optical transmission line 31 by using an existing QKD device can be implemented.

### Fifth Arrangement

Next, a fifth arrangement will be described. In the description of the fifth arrangement, description similar to that of the second arrangement will be omitted, and portions different from those of the second arrangement will be described.

### Configuration Example

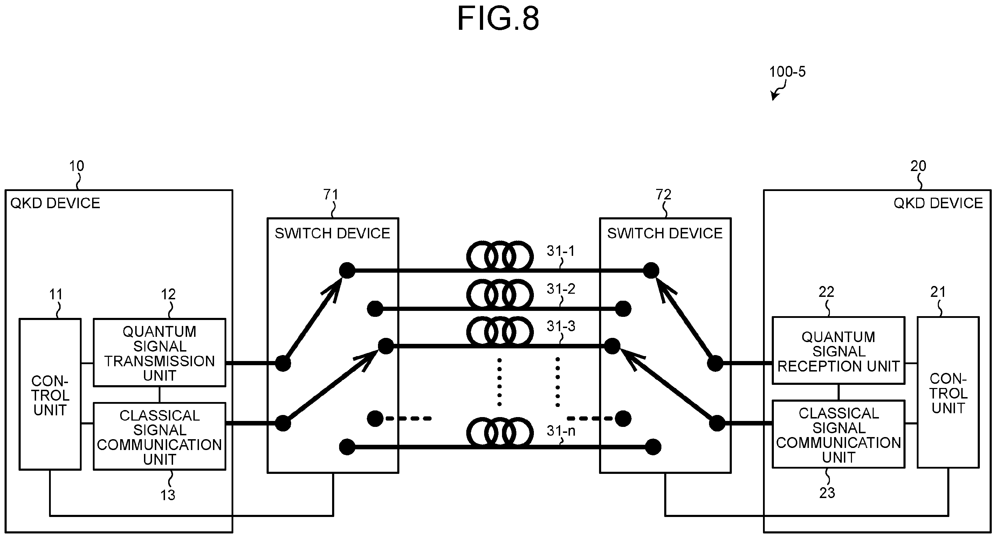

Fig. 8 illustrates a configuration example of a quantum key distribution system 100-5 of the fifth arrangement. The quantum key distribution system 100-5 of the fifth arrangement includes the QKD devices 10 and 20, the n optical transmission lines 31-1 to 31-n, and switch devices 71 and 72.

The QKD device 10 on the transmission side includes the control unit 11, the quantum signal transmission unit 12, and the classical signal communication unit 13. The QKD device 20 on the reception side includes the control unit 21, the quantum signal reception unit 22, and the classical signal communication unit 23.

The QKD device 10 on the transmission side transmits an encryption key on a photon to the QKD device 20 on the reception side. Operations of the control unit 11, the quantum signal transmission unit 12, and the classical signal communication unit 13 are similar to that of the second arrangement, so that the description thereof will be omitted.

In the fifth arrangement, the switch unit 15 of the second arrangement is implemented as the switch device 71 outside the QKD device 10.

The QKD device 20 on the reception side receives the encryption key transmitted on a photon by the QKD device 10 on the transmission side. Operations of the control unit 21, the quantum signal reception unit 22, and the classical signal communication unit 23 are similar to that of the second arrangement, so that the description thereof will be omitted.

In the fifth arrangement, the switch unit 25 of the second arrangement is implemented as the switch device 72 outside the QKD device 10.

According to the quantum key distribution system 100-5 of the fifth arrangement, effects similar to those of the second arrangement can be obtained. As compared to the second arrangement, the switch devices 71 and 72 are provided outside the QKD devices 10 and 20, so that the quantum key distribution system 100-5 that enables more inexpensive selection of an optical transmission line 31 by using an existing QKD device can be implemented.

### Sixth Arrangement

Next, a sixth arrangement will be described. In the description of the sixth arrangement, description similar to that of the third arrangement will be omitted, and portions different from those of the third arrangement will be described.

### Configuration Example

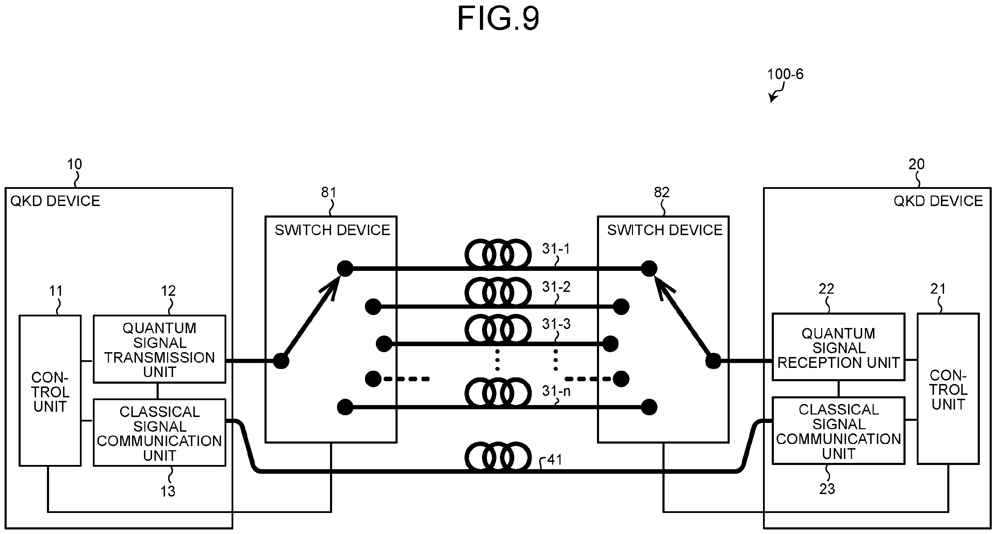

Fig. 9 illustrates a configuration example of a quantum key distribution system 100-6 of the sixth arrangement. The quantum key distribution system 100-6 of the sixth arrangement includes the QKD devices 10 and 20, the n optical transmission lines 31-1 to 31-n, the optical transmission line 41, and switch devices 81 and 82.

The QKD device 10 on the transmission side includes the control unit 11, the quantum signal transmission unit 12, and the classical signal communication unit 13. The QKD device 20 on the reception side includes the control unit 21, the quantum signal reception unit 22, and the classical signal communication unit 23.

The QKD device 10 on the transmission side transmits an encryption key on a photon to the QKD device 20 on the reception side. Operations of the control unit 11, the quantum signal transmission unit 12, and the classical signal communication unit 13 are similar to that of the third arrangement, so that the description thereof will be omitted.

In the sixth arrangement, the switch unit 16 of the third arrangement is implemented as the switch device 81 outside the QKD device 10.

The QKD device 20 on the reception side receives the encryption key transmitted on a photon by the QKD device 10 on the transmission side. Operations of the control unit 21, the quantum signal reception unit 22, and the classical signal communication unit 23 are similar to that of the third arrangement, so that the description thereof will be omitted.

In the sixth arrangement, the switch unit 25 of the third arrangement is implemented as the switch device 82 outside the QKD device 10.

According to the quantum key distribution system 100-6 of the sixth arrangement, effects similar to those of the third arrangement can be obtained. As compared to the third arrangement, the switch devices 81 and 82 are provided outside the QKD devices 10 and 20, so that the quantum key distribution system 100-6 that enables more inexpensive selection of an optical transmission line 31 by using an existing QKD device can be implemented.

### Seventh Arrangement

Next, a seventh arrangement will be described. In the description of the seventh arrangement, description similar to that of the first arrangement will be omitted, and portions different from those of the first arrangement will be described. In the seventh arrangement, a case where the QKD device 10 further has an encryption key reception function and the QKD device 20 further has an encryption key transmission function will be described.

### Configuration Example

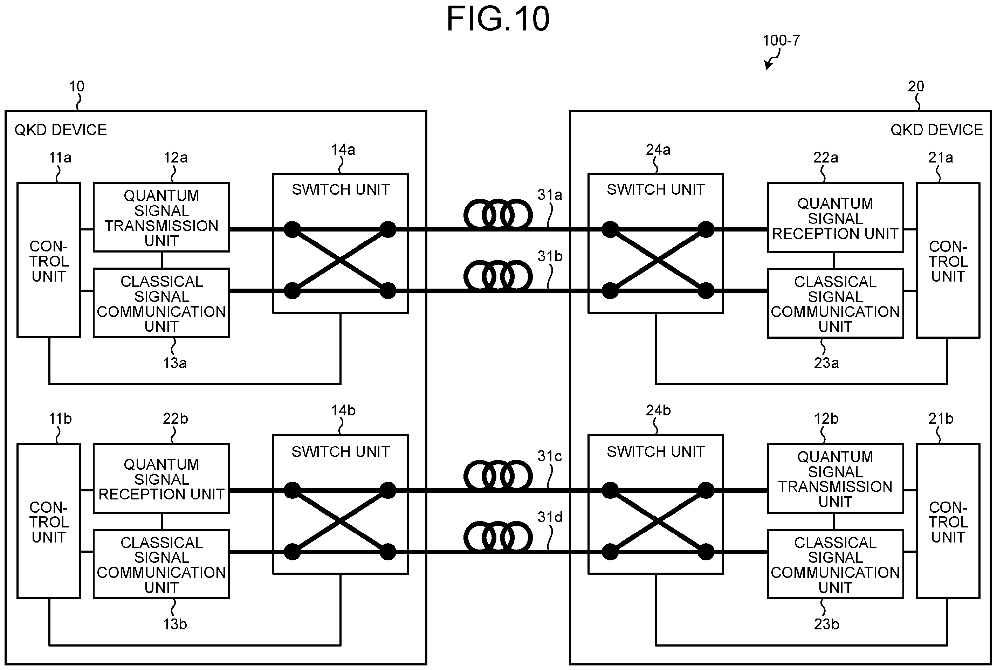

Fig. 10 illustrates a configuration example of a quantum key distribution system 100-7 of the seventh arrangement. The quantum key distribution system 100-7 of the seventh arrangement includes the QKD devices 10 and 20 and four optical transmission lines 31a to 31d.

The QKD device 10 includes control units 11a and 11b, a quantum signal transmission unit 12a, a quantum signal reception unit 22b, classical signal communication units 13a and 13b, and switch units 14a and 14b.

Operations of the control unit 11a, the quantum signal transmission unit 12a, a classical signal communication unit 13a, and the switch unit 14a are similar to those of the control unit 11, the quantum signal transmission unit 12, the classical signal communication unit 13, and the switch unit 14 of the first arrangement, so that the description thereof will be omitted. That is, the control unit 11a, the quantum signal transmission unit 12a, the classical signal communication unit 13a, and the switch unit 14a are used to transmit an encryption key to the QKD device 20.

Operations of the control unit 11b, a quantum signal transmission unit 12b, the classical signal communication unit 13b, and the switch unit 14b are similar to those of the control unit 21, the quantum signal reception unit 22, the classical signal communication unit 23, and the switch unit 24 of the first arrangement, so that the description thereof will be omitted. That is, the control unit 11b, the quantum signal transmission unit 12b, the classical signal communication unit 13b, and the switch unit 14b are used to receive an encryption key from the QKD device 20.

The QKD device 20 includes control units 21a and 21b, a quantum signal reception unit 22a and the quantum signal transmission unit 12b, classical signal communication units 23a and 23b, and switch units 24a and 24b.

Operations of the control unit 21a, the quantum signal transmission unit 22a, a classical signal communication unit 23a, and the switch unit 24a are similar to those of the control unit 11b, the quantum signal transmission unit 12b, the classical signal communication unit 13b, and the switch unit 14b of the QKD device 10, so that the description thereof will be omitted.

Operations of the control unit 21b, the quantum signal transmission unit 22b, a classical signal communication unit 23b, and the switch unit 24b are similar to those of the control unit 11a, the quantum signal transmission unit 12a, the classical signal communication unit 13a, and the switch unit 14a of the QKD device 10, so that the description thereof will be omitted.

As illustrated in Fig. 10, the QKD devices 10 and 20 may have both an encryption key transmission function and an encryption key reception function.

Finally, hardware configuration examples of the QKD devices 10 to 10-7 and 20 to 20-7 of the first to seventh arrangements will be described.

### Hardware Configuration Example

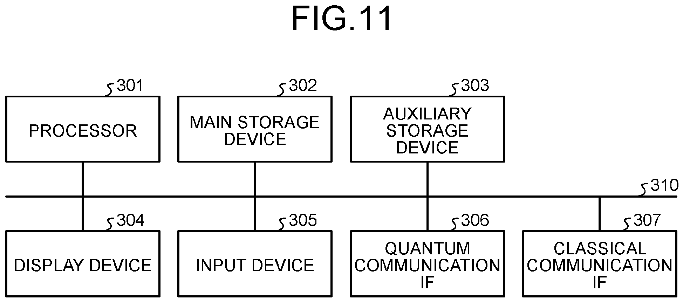

Fig. 11 illustrates the hardware configuration examples of the QKD devices 10 to 10-7 and 20 to 20-7 of the first to seventh arrangements. The QKD devices 10 to 10-7 and 20 to 20-7 include a processor 301, a main storage device 302, an auxiliary storage device 303, a display device 304, an input device 305, a quantum communication IF 306, and a classical communication IF 307.

The processor 301, the main storage device 302, the auxiliary storage device 303, the display device 304, the input device 305, the quantum communication IF 306, and the classical communication IF 307 are connected via a bus 310.

The processor 301 executes a program read from the auxiliary storage device 303 to the main storage device 302. The main storage device 302 is a memory such as a ROM and a RAM. The auxiliary storage device 303 is an HDD, a memory card, or the like.

The display device 304 displays the states and the like of the QKD devices 10 to 10-7 and 20 to 20-7. The input device 305 receives input from a user. Note that the display device 304 and the input device 305 may be implemented by a touch panel or the like having a display function and an input function. Furthermore, the display device 304 and the input device 305 are not required to be provided in the QKD devices 10 to 10-7 and 20 to 20-7. In this case, for example, a display function and an input function of an external terminal connected to the QKD devices 10 to 10-7 and 20 to 20-7 are used.

The quantum communication IF 306 is an interface for connection to a transmission line for a quantum signal channel to which a photon is transmitted. The classical communication IF 307 is an interface for connection to a transmission line for a classical signal channel in which a control signal between the QKD device 20 and the facing QKD device 10 is transmitted.

Programs to be executed by the QKD devices 10 to 10-7 and 20 to 20-7 are supplied as computer program products by being stored in computer readable storage media such as a CD-ROM, a memory card, a CD-R, and a digital versatile disc (DVD) in a file in an installable format or an executable format.

Furthermore, the programs to be executed by the QKD devices 10 to 10-7 and 20 to 20-7 may be supplied by being stored in a computer connected to a network such as the Internet and downloaded via the network.

The programs to be executed by the QKD devices 10 to 10-7 and 20 to 20-7 may be supplied via a network such as the Internet without being downloaded.

Furthermore, the programs to be executed by the QKD devices 10 to 10-7 and 20 to 20-7 may be supplied by being preliminarily incorporated in a ROM and the like.

The programs to be executed by the QKD devices 10 to 10-7 and 20 to 20-7 have a module configuration including a function that can be implemented by a program among functional configurations of the QKD devices 10 of the arrangements. The function to be implemented by a program is loaded in the main storage device 302 by the processor 301 reading the program from a storage medium such as the auxiliary storage device 303 and executing the program. That is, the function to be implemented by a program is generated on the main storage device 302.

Note that some or all of the functions of the QKD devices 10 to 10-7 and 20 to 20-7 may be implemented by the hardware of an integrated circuit (IC) or the like. The IC is, for example, a processor that executes dedicated processing.

Furthermore, when functions are implemented by a plurality of processors, each of the processors may implement one of the functions, or may implement two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

## Claims

1. A quantum key distribution system (100) comprising:
a transmission device (10) configured to transmit a photon to be used for generating an encryption key in quantum key distribution;
a reception device (20) configured to receive the photon, wherein
the transmission device (10) includes a quantum signal transmission unit (12) configured to transmit the photon as a quantum signal, and
the reception device (20) includes a quantum signal reception unit (22) configured to receive the quantum signal;
a first switch unit (14) configured to select a transmission line for transmitting the quantum signal from a plurality of transmission lines; and
a second switch unit (24) configured to select the transmission line for receiving the quantum signal from the plurality of transmission lines.

2. The quantum key distribution system (100) according to claim 1, wherein
the transmission device (10) further includes a first control unit (11) configured to determine a transmission line for transmitting the quantum signal based on an encryption key generation speed measured for each of the plurality of transmission lines,
the first switch unit (14) selects the transmission line determined by the first control unit (11) from the plurality of transmission lines,
the reception device (20) further includes a second control unit (21) configured to determine the transmission line for transmitting the quantum signal based on the encryption key generation speed, and
the second switch unit (24) selects the transmission line determined by the second control unit (21) from the plurality of transmission lines.

3. The quantum key distribution system (100) according to claim 2, wherein
the plurality of transmission lines is composed of two transmission lines,
the transmission device (10) further includes a first classical signal communication unit (13) configured to transmit and receive a control signal in the quantum key distribution as a classical signal,
the first control unit (11) determines a transmission line having a higher encryption key generation speed among the two transmission lines as the transmission line for transmitting the quantum signal, and determines a transmission line having a lower encryption key generation speed among the two transmission lines as a transmission line for transmitting and receiving the classical signal,
the reception device (20) further includes a second classical signal communication unit (23) configured to transmit and receive the classical signal, and
the second control unit (21) determines the transmission line having the higher encryption key generation speed among the two transmission lines as the transmission line for receiving the quantum signal, and determines the transmission line having the lower encryption key generation speed among the two transmission lines as a transmission line for transmitting and receiving the classical signal.

4. The quantum key distribution system (100) according to claim 2, wherein
the plurality of transmission lines is composed of n transmission lines, n being an integer of three or more,
the transmission device (10) further includes a first classical signal communication unit (13) configured to transmit and receive a control signal in the quantum key distribution as a classical signal,
the first control unit (11) determines a transmission line having a higher encryption key generation speed among the n transmission lines as the transmission line for transmitting the quantum signal, and determines a transmission line for transmitting and receiving the classical signal from n-1 transmission lines excluding the transmission line used for transmitting the quantum signal,
the reception device (20) further includes a second classical signal communication unit (23) configured to transmit and receive the classical signal, and
the second control unit (21) determines the transmission line having the higher encryption key generation speed among the n transmission lines as the transmission line for receiving the quantum signal, and determines the transmission line for transmitting and receiving the classical signal from the n-1 transmission lines excluding the transmission line used for transmitting the quantum signal.

5. The quantum key distribution system (100) according to any one of claims 2 to 4, wherein
the first control unit (11) and the second control unit (21) periodically measure the encryption key generation speed for each of the plurality of transmission lines, and determine the transmission line for transmitting the quantum signal based on the encryption key generation speed.

6. The quantum key distribution system (100) according to any one of claims 2 to 4, wherein
the first control unit (11) and the second control unit (21) measure the encryption key generation speed for each of the plurality of transmission lines at a time when the generation of the encryption key is started, and determine the transmission line for transmitting the quantum signal based on the encryption key generation speed.

7. The quantum key distribution system (100) according to any one of claims 2 to 4, wherein
the first control unit (11) and the second control unit (21) measure the encryption key generation speed for each of the plurality of transmission lines at a time when the encryption key generation speed becomes smaller than a threshold, and determine the transmission line for transmitting the quantum signal based on the encryption key generation speed.

8. The quantum key distribution system (100) according to any one of claims 1 to 4, wherein
the first switch unit (14) is provided in the transmission device (10), and
the second switch unit (24) is provided in the reception device (20).

9. The quantum key distribution system (100) according to any one of claims 1 to 4, wherein
the first switch unit (14) is a first device connected to the transmission device (10), and
the second switch unit (24) is a second device connected to the reception device (20).

10. A quantum key distribution device comprising:
a quantum signal transmission unit (12) configured to transmit a photon to be used for generating an encryption key in quantum key distribution as a first quantum signal;
a quantum signal reception unit (22) configured to receive the photon transmitted from another quantum key distribution device as a second quantum signal;
a first switch unit (14) configured to select a transmission line for transmitting the first quantum signal from a plurality of transmission lines; and
a second switch unit (24) configured to select the transmission line for receiving the second quantum signal from the plurality of transmission lines.

11. A quantum key distribution method comprising:
transmitting, by a transmission device (10), a photon to be used for generating an encryption key in quantum key distribution;
selecting, by a first switch unit (14), a transmission line for transmitting the quantum signal from a plurality of transmission lines;
selecting, by a second switch unit (24), the transmission line for receiving the quantum signal from the plurality of transmission lines; and
receiving, by a reception device (20), the quantum signal.
